# FASCICULE DE BREVET EUROPEEN

(11) **EP 3 454 246 B1**
(45) Date de publication et mention de la délivrance du brevet: **29.01.2020**
(21) Numéro de dépôt: 18193027.2
(22) Date de dépôt: 06.09.2018
(51) Int. Cl.: G06F 21/57, G06F 9/445, G06F 21/64

(54) **PROCÉDÉ DE TRANSMISSION ET DE VÉRIFICATION DE VALIDITÉ DE DONNÉES DE CONFIGURATION DANS UN SYSTÈME ÉLECTRONIQUE, SYSTÈME ÉLECTRONIQUE ET PRODUIT PROGRAMME D'ORDINATEUR ASSOCIÉS**
VERFAHREN ZUR ÜBERTRAGUNG VON KONFIGURATIONSDATEN UND ZUR VERIFIZIERUNG IHRER GÜLTIGKEIT IN EINEM ELEKTRONISCHEN SYSTEM, ENTSPRECHENDES ELEKTRONISCHES SYSTEM UND ENTSPRECHENDES COMPUTERPROGRAMM
METHOD FOR TRANSMITTING AND VERIFYING THE VALIDITY OF CONFIGURATION DATA IN AN ELECTRONIC SYSTEM, ASSOCIATED ELECTRONIC SYSTEM AND COMPUTER PROGRAM PRODUCT

(30) Priorité: 08.09.2017 FR 1758290
(43) Date de publication de la demande: 13.03.2019
(73) Titulaire: ALSTOM Transport Technologies, 93400 Saint-Ouen (FR)
(72) Inventeur: DEGENEVE, Xavier, 69003 Lyon (FR); BREGARDIS, Cedric, 69003 Lyon (FR); QUADRINI, Matthieu, 63120 Sauviat (FR); FERNANDEZ-VALBON, Rafael, 69003 Lyon (FR)
(74) Mandataire: Lavoix

(56) Documents cités:
- DE-A1-102009 058 754
- US-A1- 2008 216 067
- US-A1- 2014 032 916

## Description

La présente invention concerne un procédé de transmission et de vérification de validité de données de configuration dans un système électronique, un système électronique et un produit programme d'ordinateur associés.

On connait de US 2008/216067, US 2014/032916 et DE 10 2009 058754 des procédés de reconfiguration d'une pluralité de cartes électroniques dans un véhicule.

Dans l'état de la technique, il est également connu d'utiliser des systèmes électroniques à stockage centralisé de données de configuration. Les données de configuration sont destinées à différents modules ou encore cartes électroniques constituant ces systèmes.

Parmi ces systèmes, on peut notamment citer certains équipements embarqués à bord d'un véhicule ferroviaire, comme par exemple une console de communication avec le conducteur du véhicule ferroviaire, un équipement de traction, un équipement réseau, un équipement qui actionne des sorties ou lit des entrées. On peut notamment aussi citer certains équipements au sol le long des voies d'un système ferroviaire, notamment de signalisation, comme par exemple un équipement qui s'interface avec des objets à la voie (feux de signalisation, aiguillage, passage à niveaux, circuit de voies, balises).

Les données de configuration sont nécessaires pour le fonctionnement des modules ou des cartes électroniques correspondants, et sont stockées dans un module de stockage centralisé prévu à cet effet.

Lorsqu'un système électronique à stockage centralisé de données de configuration présente un niveau de criticité élevé, les données de configuration sont stockées sous la forme d'une structure de données sécurisée.

Cette structure est associée à une signature qui permet de vérifier la validité des données de configuration correspondantes. La vérification de la validité des données comprend notamment la vérification de l'authenticité, de l'intégrité et de la cohérence de ces données.

De manière générale, la validité des données de configuration est vérifiée à chaque démarrage du système électronique correspondant.

En particulier, lors d'un tel démarrage, l'une des cartes électroniques du système électronique extrait du module de stockage l'ensemble des données de configuration et vérifie la validité de ces données.

Lorsque la validité est vérifiée, ladite carte électronique transmet aux autres cartes électroniques les données de configuration correspondant à ces cartes.

À la réception des données de configuration correspondantes, chaque carte électronique stocke ces données dans sa mémoire interne et vérifie leur intégrité ainsi que leur cohérence.

Le système électronique est opérationnel lorsque chaque carte a reçu, a vérifié et a stocké les données de configuration correspondantes.

On conçoit alors qu'une telle méthode de démarrage d'un système électronique à stockage centralisé de données de configuration est particulièrement lente et se trouve inadaptée lorsqu'il est nécessaire de faire souvent des redémarrages du système et/ou lorsque le système comporte un grand nombre de modules ou de cartes électroniques. Ainsi, par exemple, la durée d'un démarrage d'un système électronique selon cette méthode peut prendre jusqu'à 30 minutes lorsque le système est constitué par exemple de 50 cartes électroniques.

La présente invention a pour but de remédier à cet inconvénient de l'état de la technique en proposant un système électronique et un procédé de transmission et de vérification de validité de données de configuration mis en œuvre par ce système, permettant de réduire considérablement le temps de redémarrage d'un tel système.

À cet effet, l'invention a pour objet un procédé de transmission et de vérification de validité de données de configuration selon la revendication 1.

Suivant d'autres aspects avantageux de l'invention, le procédé comprend une ou plusieurs des caractéristiques des revendications 2 à 10.

L'invention a également pour objet un produit programme d'ordinateur comportant des instructions logicielles qui, lorsque mises en œuvre par un équipement informatique, mettent en œuvre le procédé tel que défini ci-dessus.

L'invention a également pour objet un système électronique à stockage centralisé des données de configuration selon la revendication 12.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système électronique selon l'invention, le système comportant notamment un module de stockage centralisé ;
- la figure 2 est une vue schématique d'une structure de données stockée dans le module de stockage de la figure 1 ; et
- la figure 3 est un organigramme d'un procédé de transmission et de vérification de validité de données de configuration dans le système électronique de la figure 1.

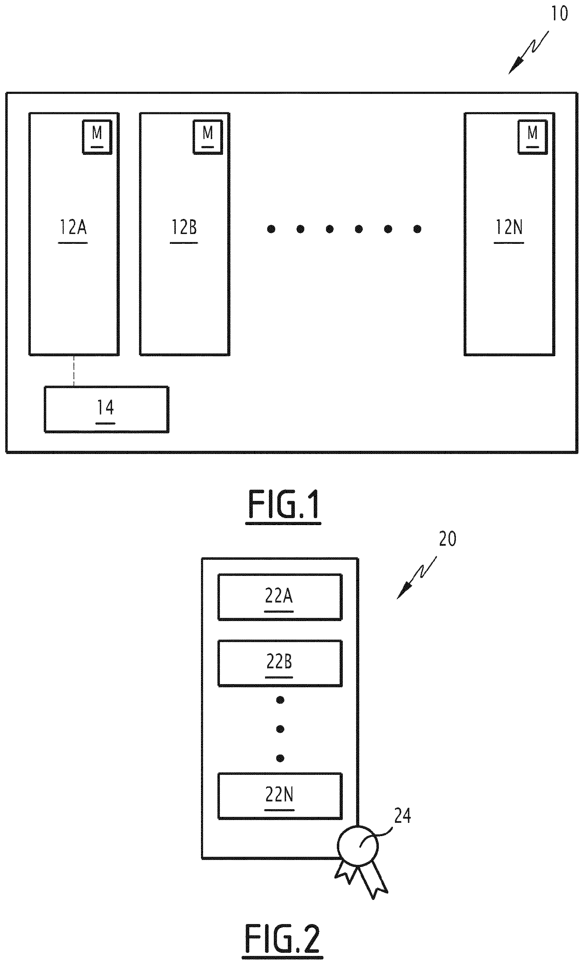

Le système électronique 10 de la figure 1 comporte une pluralité de cartes électroniques 12A à 12N mettant en œuvre le fonctionnement du système 10, et un module de stockage centralisé 14.

Le système électronique 10 est notamment utilisable dans le domaine ferroviaire et présente par exemple un équipement embarqué à bord d'un véhicule ferroviaire, tel qu'une console de communication avec le conducteur du véhicule.

Chaque carte électronique 12A à 12N fournit un service au système électronique 10 en utilisant des données de configuration propres à cette carte. Autrement dit, les données de configuration définissent le service fourni par la carte électronique 12A à 12N correspondante en réponse à de différents évènements survenus dans le système 10.

Chaque carte électronique 12A à 12N se présente par exemple sous la forme d'un circuit logique programmable comportant notamment une mémoire interne M. Un tel circuit logique programmable est par exemple de type FPGA (de l'anglais « *Field-Programmable Gate Array »).*

La mémoire interne M peut avoir la propriété de garder les informations stockées même quand elle n'est pas alimentée électriquement.

La mémoire interne est propre à mémoriser une variable signature et des variables de configuration.

La variable de signature correspond à une signature élémentaire des variables de configuration.

Les variables de configuration correspondent à des données configuration récupérées par la carte électronique 12A à 12N comme cela sera expliqué par la suite.

Selon une variante de réalisation, au moins certaines des cartes électroniques se présentent sous une forme plus complexe, par exemple sous la forme d'un mini-calculateur comportant notamment un processeur et une mémoire interne.

Selon une variante de réalisation, au moins certaines des cartes électroniques sont remplaçables. Dans ce cas, le système électronique 10 est dit modulable.

Selon une variante de réalisation, au moins certaines des cartes électroniques sont remplaçables à chaud sans perturber le fonctionnement des autres cartes du système (excepté les communications/service avec la carte en cours de remplacement). Dans ce cas, le système électronique 10 est dit modulable à chaud ou en fonctionnement.

Les données de configuration de l'ensemble des cartes 12A à 12N sont stockées au moins initialement dans le module de stockage centralisé 14 sous la forme d'une structure de données 20 sécurisée qui est illustrée plus en détail sur la figure 2.

Ainsi, en référence à cette figure 2, la structure de données 20 comprend une pluralité de blocs de données de configuration 22A à 22N associés respectivement aux cartes électroniques 12A à 12N.

Chacun de ces blocs de données 22A à 22N comporte des données de configuration propres à la carte électronique 12A à 12N associée à ce bloc.

La structure de données 20 est associée à une signature globale 24 permettant de vérifier la validité des données contenues dans cette structure.

La signature globale 24 est par exemple stockée dans le module de stockage centralisé 14 avec la structure de données 20.

La signature globale 24 est par exemple déterminée à partir des données contenues dans la structure 20 selon des méthodes connues en soi.

Les données de configuration sont modifiables par exemple par un utilisateur afin de modifier le fonctionnement du système embarqué 10. Ainsi, dans le précédent exemple de la console de communication avec le conducteur, la modification des données de configuration permet par exemple d'activer de nouveaux messages pour le conducteur.

Lorsque les données de configuration sont modifiées, la signature globale 24 est également modifiée.

Le module de stockage centralisé 14 est relié à l'une des cartes électroniques 12A à 12N, par exemple à la carte électronique 12A, appelée par la suite carte principale.

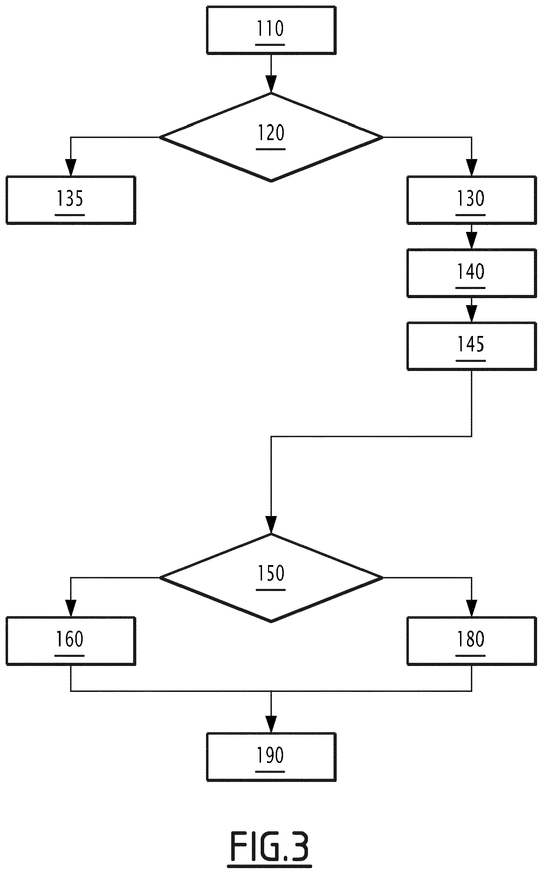

La carte principale 12A permet de mettre en œuvre un procédé de transmission et de vérification de validité des données de configuration issues du module de stockage centralisé 14 qui sera expliqué par la suite en référence à la figure 3 illustrant un organigramme de ses étapes.

En particulier, le procédé de transmission et de vérification de validité des données de configuration correspond à une phase de démarrage PR du système électronique 10.

Cette phase de démarrage PR est alors mise en œuvre au démarrage initial du système électronique 10 et à chaque redémarrage suivant.

Lors de l'étape initiale 110 de la phase de démarrage PR, le système électronique 10 reçoit une commande de démarrage initial ou de redémarrage. Il est à noter que la commande reçue n'indique pas si le démarrage est initial ou avec des données de configuration modifiées ou non.

Le système électronique 10 active alors le fonctionnement de l'ensemble des cartes électroniques 12A à 12N et notamment le fonctionnement de la carte principale 12A.

Lors de l'étape 120 suivante, la carte principale 12A extrait du module de stockage 14 la structure de données 20.

Puis, la carte principale 12A vérifie la validité des données de configuration issues de la structure de données 20.

La vérification de la validité des données de configuration comprend notamment la vérification de l'authenticité, de l'intégrité et de la cohérence de ces données.

Pour vérifier la validité, la carte principale 12A génère par exemple à partir des données de configuration reçues, une signature globale SG en utilisant les mêmes méthodes que celles utilisées pour déterminer la signature globale 24 associée à la structure de données 20.

Puis, la carte principale 12A compare la signature globale générée SG avec la signature 24 associée à la structure de données 20.

Lorsque les deux signatures coïncident, la carte principale 12A passe à l'étape 130. Dans le cas contraire, la carte principale 12A passe à l'étape 135 lors de laquelle elle génère un message d'erreur destiné par exemple à l'utilisateur et interrompt l'exécution de la phase de démarrage PR.

Lors de l'étape 130, la carte principale 12A génère une signature élémentaire SE pour chacune des cartes électroniques 12A à 12N.

Une telle signature élémentaire SE pour une carte électronique 12A à 12N donnée est par exemple générée à partir des données de configuration propres à cette carte électronique 12A à 12N, en utilisant par exemple des méthodes analogues à celles utilisées pour générer la signature globale SG.

Lors de l'étape 140 suivante, la carte principale 12A stocke les signatures élémentaires SE générées et la signature globale SG générée, dans sa mémoire interne M.

Puis, lors de la même étape 140, la carte principale 12A met à disposition de chaque carte électronique 12A à 12N les signatures élémentaires SE générées et les données de configuration propres à cette carte 12A à 12N.

Puis, chaque carte électronique 12A à 12N récupère la signature élémentaire qui lui est associée par la carte principale 12A.

Lors de l'étape 145 suivante, chaque carte 12A à 12N calcule sa signature élémentaire SE à partir des variables de configuration mémorisées dans sa mémoire interne M, en utilisant par exemple des méthodes analogues à celles utilisées pour générer la signature globale SG, et fixe la variable de signature égale à la valeur calculée de la signature élémentaire

Lors de l'étape 150 suivante, chaque carte électronique 12A à 12N compare la signature élémentaire SE récupérée avec la variable signature qu'elle a dans sa mémoire interne M (à noter que si aucune information a été stockée dans cette mémoire M au préalable la carte se comportera comme si la variable signature est différente et que les données ne sont pas valides).

Puis, chaque carte électronique 12A à 12N vérifie la validité des variables de configuration stockées dans sa mémoire interne M en utilisant la signature élémentaire SE récupérée et la variable signature.

Pour vérifier la validité des variables de configuration correspondantes, chaque carte électronique 12A à 12N compare la variable signature avec la signature élémentaire SE récupérée.

Si la signature élémentaire SE coïncide avec la variable signature, la carte électronique 12A à 12N correspondante valide les variables de configuration et la carte 12A à 12N passe à l'étape 180. Dans le cas contraire, la carte électronique 12A à 12N correspondante passe à l'étape 160.

Lors de l'étape 180, la carte 12A à 12N correspondante récupère les variables de configuration depuis sa mémoire interne M et, par exemple, met en place ces variables pour être opérationnelle.

Lors de l'étape 160, la carte 12A à 12N récupère les données de configuration qui lui sont associées et sont mises à disposition par la carte principale 12A, calcule la signature SE des données reçues et vérifie qu'elle coïncide avec la signature SE mise à disposition.

Puis, la carte 12A à 12N correspondante fixe la variable de signature égale à la signature élémentaire SE calculée ou récupérée et les variables de configuration égales aux données de configurations récupérées.

À la fin de cette étape 160, la carte 12A à 12N correspondante récupère les variables de configuration depuis sa mémoire interne et, par exemple, met en place ces variables pour être opérationnelle.

Ainsi, après les étapes 160 et 180, chaque carte 12A à 12N possède ses données de configuration et leur signature SE et a une copie des données de configuration et de leur signature dans sa mémoire M.

L'étape 190 est l'étape finale de la phase de démarrage PR à l'issue de laquelle, le système électronique 20 est opérationnel.

Avantageusement, à la suite de l'étape 180, de manière périodique, les cartes 12B à 12N vérifient que les données de configuration utilisées sont bien autorisées. Pour cela, elles vérifient que la signature élémentaire SE utilisée, c'est-à-dire la variable signature, est toujours la même que celle mise à disposition par la carte principale 12A.

Si cela n'est pas le cas, la carte génère un message d'erreur destiné par exemple à l'utilisateur et interrompt l'exécution ou retourne à l'étape 160 pour récupérer les nouvelles données de configuration (ce choix dépend de la fonction fournie, par exemple sur une fonction de sécurité le produit se mettra dans un état sûr).

Avantageusement, le procédé simplifie considérablement le changement d'une carte électronique 12B, ... 12N dans le système électronique 10 par une nouvelle carte électronique.

Dans ce cas, le procédé comprend en outre les étapes suivantes :
- le changement d'une carte électronique 12B, ... 12N dans le système électronique 10 par une nouvelle carte électronique ;
- la génération d'une signature élémentaire SE pour au moins la nouvelle carte électronique à partir des données de configuration mémorisées dans le module de stockage centralisé 14 ;
- la transmission au moins à la nouvelle carte électronique de la signature élémentaire SE ; et
- la réalisation de l'étape de vérification 150 des variables de configuration pour la nouvelle carte électronique.

On conçoit alors que l'invention présente un certain nombre d'avantages.

En effet, le procédé de transmission et de vérification de validité de données de configuration selon l'invention permet d'effectuer un redémarrage du système électronique de façon particulièrement rapide car seules les données non présentes seront envoyées.

En particulier, lors de la phase de redémarrage du système électronique 10, les données de configuration, lorsqu'elles sont inchangées, ne sont pas transmises à nouveau aux cartes électroniques correspondantes.

La validité de ces données est vérifiée en utilisant les signatures élémentaires correspondantes qui sont transmises aux cartes électroniques correspondantes de façon particulièrement rapide.

La validité de ces données est vérifiée périodiquement en utilisant les signatures élémentaires correspondantes ceci permet de s'assurer qu'un changement de configuration est bien appliqué (ou que les actions appropriées seront effectuées).

Ceci permet alors de réduire considérablement le temps d'exécution de la phase de redémarrage et donc le temps de redémarrage total du système électronique.

## Revendications

1. Procédé de transmission et de vérification de validité de données de configuration dans un système électronique (10) à stockage centralisé des données de configuration, le système électronique comportant une pluralité de cartes électroniques (12A,...,12N) aptes à mettre en œuvre le fonctionnement du système électronique (10) en utilisant des données de configuration propres à chacune de ces cartes (12A,...,12N) et un module de stockage centralisé (14) apte à stocker de manière centralisée les données de configuration pour l'ensemble des cartes électroniques (12A,...,12N), chaque carte électronique (12A,...,12N) comprenant une mémoire interne propre à mémoriser une variable signature et des variables de configuration;
le procédé comprenant les étapes suivantes :
- la génération (130) d'une signature élémentaire (SE) pour chacune des cartes électroniques (12A,...,12N) à partir des données de configuration mémorisées dans le module de stockage centralisé (14) ;
- la transmission (140) à chaque carte électronique (12A,...,12N) de la signature élémentaire (SE) propre à cette carte (12A,...,12N) ;
- le calcul (145) par chaque carte électronique (12A,...,12N) de la variable signature en fonction des variables de configuration mémorisées dans la mémoire interne de cette carte électronique (12A,...,12N) ;
- la vérification (150) par chaque carte électronique (12A,...,12N) de la validité des variables de configuration mémorisées dans la mémoire interne de cette carte (12A,...,12N) en utilisant la signature élémentaire (SE) reçue et la variable signature ; et
le procédé comprenant l'étape suivante mise en œuvre pour chaque carte électronique (12A,...,12N), pour laquelle lors de l'étape de vérification (150) de la validité des variables de configuration les variables de configuration sont considérées invalides :
- la récupération (160) des données de configuration propres à cette carte (12A,...,12N) et la modification des variables de configuration à partir des données de configuration récupérées.

2. Procédé selon la revendication 1, dans lequel chaque signature élémentaire (SE) est générée par une seule des cartes électroniques (12A,...,12N) en utilisant les données de configuration propres à chacune des cartes électroniques (12A,...,12N) mémorisées dans le module de stockage centralisé (14).

3. Procédé selon la revendication 1 ou 2, dans lequel les données de configuration sont stockées sous la forme d'une structure de données sécurisée (20) associée à une signature globale (24).

4. Procédé selon la revendication 3, le procédé comprenant, précédemment à l'étape de génération (130), l'étape suivante :
- la vérification (120) de la validité des données de configuration de la structure de données (20) en utilisant la signature globale (24) associée à cette structure (20) ;
et si la validité des données de configuration est vérifiée, l'étape de génération (130) est réalisée.

5. Procédé selon la revendication 4, dans lequel à la suite de l'étape de génération, l'ensemble des signatures élémentaires (SE) et la signature globale (24) sont stockées dans la mémoire interne de l'une des cartes électroniques (12A,...,12N), dite carte principale (12A).

6. Procédé selon la revendication 5, dans lequel les étapes de vérification (120) de la validité des données de configuration et de génération (130) d'une signature élémentaire (SE) pour chacune des cartes électroniques (12A,...,12N) sont mises en œuvre par la carte principale (12A).

7. Procédé selon l'une quelconque des revendications précédentes, dans lequel lors de l'étape de récupération (160) des données de configuration, une vérification que les données de configuration récupérées correspondent à la signature élémentaire (SE) est effectuée, puis les variables de configuration sont modifiées à partir des données de configuration récupérées de sorte à stocker en mémoire interne de ladite carte (12A, ... 12N) les données de configuration récupérées.

8. Procédé selon l'une quelconque des revendications précédentes, dans lequel le procédé comprend, pour chaque carte électronique (12A,...,12N), pour laquelle lors de l'étape de vérification (150) de la validité des variables de configuration, les variables de configuration sont considérées valides :
- la récupération (180) par la carte électronique (12A, ..., 12N) des variables de configuration depuis la mémoire interne de cette carte (12A, ... 12N).

9. Procédé selon l'une quelconque des revendications précédentes, dans lequel l'étape de récupération (160) des données de configuration comprend en outre :
- la récupération par la carte électronique (12A, ..., 12N) correspondante des variables de configuration depuis la mémoire interne de cette carte (12A, ... 12N).

10. Procédé selon l'une quelconque des revendications précédentes, dans lequel le procédé comprend les étapes suivantes :
- le changement d'une carte électronique (12B, ... 12N) dans le système électronique (10) par une nouvelle carte électronique ;
- la génération d'une signature élémentaire (SE) pour au moins la nouvelle carte électronique à partir des données de configuration mémorisées dans le module de stockage centralisé (14) ;
- la transmission au moins à la nouvelle carte électronique de la signature élémentaire (SE) ; et
- la réalisation de l'étape de vérification (150) des variables de configuration pour la nouvelle carte électronique.

11. Produit programme d'ordinateur comportant des instructions logicielles qui, lorsque mises en œuvre par un équipement informatique, mettent en œuvre le procédé selon l'une quelconque des revendications précédentes.

12. Système électronique (10) à stockage centralisé des données de configuration, le système électronique comportant une pluralité de cartes électroniques (12A,...,12N) aptes à mettre en œuvre le fonctionnement du système électronique (10) en utilisant des données de configuration propres à chacune de ces cartes (12A,...,12N) et un module de stockage centralisé (14) apte à stocker de manière centralisée les données de configuration pour l'ensemble des cartes électroniques (12A,...,12N), chaque carte électronique (12A,...,12N) comprenant une mémoire interne propre à mémoriser une variable signature et des variables de configuration ;
le système électronique (20) comportant des moyens mettant en œuvre le procédé selon l'une quelconque des revendications 1 à 10.

## Patentansprüche

1. Verfahren zum Übertragen und Verifizieren der Gültigkeit von Konfigurationsdaten in einem elektronischen System (10) mit zentraler Speicherung von Konfigurationsdaten, wobei das elektronische System eine Mehrzahl von Elektronikkarten (12A,...., 12N), die geeignet sind, den Betrieb des elektronischen Systems (10) unter Verwendung von Konfigurationsdaten, die für jede dieser Karten (12A, ..., 12N) spezifisch sind, zu veranlassen, und ein zentralisiertes Speichermodul (14) aufweist, das geeignet ist, die Konfigurationsdaten zentral für die Menge von Elektronikkarten (12A,...., 12N) zu speichern, wobei jede Elektronikkarte (12A,..., 12N) einen internen Speicher aufweist, der zum Speichern einer Signaturvariablen und Konfigurationsvariablen geeignet ist;
wobei das Verfahren die folgenden Schritte aufweist:
- das Erzeugen (130) einer elementaren Signatur (SE) für jede der Elektronikkarten (12A,....,12N) aus den im zentralen Speichermodul (14) gespeicherten Konfigurationsdaten;
- die Übertragung (140) zu jeder Elektronikkarte (12A,...., 12N) der für diese Karte (12A,..., 12N) spezifischen elementaren Signatur (SE);
- das Berechnen (145) der Signaturvariablen durch jede Elektronikkarte (12A,....,..., 12N) abhängig von den im internen Speicher dieser Elektronikkarte (12A,..., 12N) gespeicherten Konfigurationsvariablen;
- das Verifizieren (150) durch jede Elektronikkarte (12A,...,.., 12N) der Gültigkeit der im internen Speicher dieser Karte (12A,..., 12N) gespeicherten Konfigurationsvariablen unter Verwendung der empfangenen elementaren Signatur (SE) und der Signaturvariablen; und
wobei das Verfahren den folgenden Schritt aufweist, der für jede Elektronikkarte (12A,...., 12N) durchgeführt wird, für die während des Schrittes des Verifizierens (150) der Gültigkeit der Konfigurationsvariablen die Gültigkeit der Konfigurationsvariablen als ungültig angesehen wird:
- Wiederherstellen (160) der für diese Karte (12A,....,12N) spezifischen Konfigurationsdaten und Modifizieren der Konfigurationsvariablen aus den wiederhergestellten Konfigurationsdaten.

2. Verfahren nach Anspruch 1, wobei jede elementare Signatur (SE) durch nur eine der Elektronikkarten (12A,...., 12N) unter Verwendung der für jede der Elektronikkarten (12A,..., 12N) spezifischen Konfigurationsdaten erzeugt wird, die im zentralen Speichermodul (14) gespeichert sind.

3. Verfahren nach Anspruch 1 oder 2, wobei die Konfigurationsdaten in Form einer sicheren Datenstruktur (20) gespeichert werden, die einer globalen Signatur (24) zugeordnet ist.

4. Verfahren nach Anspruch 3, wobei das Verfahren zuvor in dem Erzeugungsschritt (130) den folgenden Schritt aufweist:
- das Verifizieren (120) der Gültigkeit der Konfigurationsdaten der Datenstruktur (20) unter Verwendung der dieser Struktur (20) zugeordneten globalen Signatur (24); und wenn die Gültigkeit der Konfigurationsdaten verifiziert ist, wird der Erzeugungsschritt (130) durchgeführt.

5. Verfahren nach Anspruch 4, bei dem nach dem Erzeugungsschritt die Menge der elementaren Signaturen (SE) und die globale Signatur (24) im internen Speicher einer der Elektronikkarten (12A,....,12N), der sogenannten Hauptkarte (12A), gespeichert werden.

6. Verfahren nach Anspruch 5, wobei die Schritte des Verifizierens (120) der Gültigkeit der Konfigurationsdaten und des Erzeugens (130) einer elementaren Signatur (SE) für jede der Elektronikkarten (12A,....,12N) von der Hauptkarte (12A) durchgeführt werden.

7. Verfahren nach einem der obigen Ansprüche, bei dem im Schritt der Wiederherstellung (160) der Konfigurationsdaten verifiziert wird, dass die wiederhergestellten Konfigurationsdaten der elementaren Signatur (SE) entsprechen, und dann die Konfigurationsvariablen aus den wiederhergestellten Konfigurationsdaten geändert werden, um die wiederhergestellten Konfigurationsdaten im internen Speicher der Karte (12A,.... 12N) zu speichern.

8. Verfahren nach einem der obigen Ansprüche, wobei das Verfahren für jede Elektronikkarte (12A,....,12N), für die im Schritt des Verifizierens (150) der Gültigkeit der Konfigurationsvariablen die Konfigurationsvariablen als gültig angesehen werden, aufweist:
- die Wiederherstellung (180) der Konfigurationsvariablen durch die Elektronikkarte (12A, ...., 12N) aus dem internen Speicher dieser Karte (12A, ...., 12N).

9. Verfahren nach einem der vorstehenden Ansprüche, wobei der Schritt der Wiederherstellung (160) von Konfigurationsdaten ferner aufweist: :
- die Wiederherstellung durch die entsprechende Elektronikkarte (12A, ...., 12N) der Konfigurationsvariablen aus dem internen Speicher dieser Karte (12A, ...., 12N).

10. Verfahren nach einem der vorstehenden Ansprüche, worin das Verfahren die folgenden Schritte aufweist:
- den Wechsel einer Elektronikkarte (12B, .... 12N) in dem elektronischen System (10) zu einer neuen Elektronikkarte;
- das Erzeugen einer elementaren Signatur (SE) für mindestens die neue Elektronikkarte aus den im zentralen Speichermodul (14) gespeicherten Konfigurationsdaten;
- die Übertragung der elementaren Signatur (SE) an mindestens die neue Elektronikkarte; und
- die Durchführung des Schritts des Verifizierens (150) der Konfigurationsvariablen für die neue Elektronikkarte.

11. Computerprogrammprodukt, aufweisend Softwareanweisungen, die, wenn sie durch eine Datenverarbeitungseinrichtung durchgeführt werden, den Prozess gemäß einem der vorgenannten Ansprüche durchführen.

12. Elektronisches System (10) zum zentralen Speichern von Konfigurationsdaten, wobei das elektronische System eine Mehrzahl von Elektronikkarten (12A,...., 12N), die geeignet sind, den Betrieb des elektronischen Systems (10) unter Verwendung von Konfigurationsdaten, die für jede dieser Karten (12A,..., 12N) spezifisch sind, zu veranlassen, und ein zentralisiertes Speichermodul (14) aufweist, das geeignet ist, Konfigurationsdaten für die Menge von Elektronikkarten (12A,...., 12N) zentral zu speichern, wobei jede Elektronikkarte (12A,..., 12N) einen internen Speicher aufweist, der zum Speichern einer Signaturvariablen und von Konfigurationsvariablen geeignet ist;
wobei das elektronische System (20) Mittel zur Durchführung des Prozesses nach einem der Ansprüche 1 bis 10 aufweist.

## Claims

1. Method for transmitting and checking the validity of configuration data in an electronic system (10) with centralized storage of the configuration data, the electronic system comprising a plurality of electronic boards (12A, ..., 12N) able to implement the operation of the electronic system (10) using configuration data specific to each of these boards (12A, ..., 12N) and a centralized storage module (14) able to centrally store the configuration data for the set of electronic boards (12A, ..., 12N), each electronic board (12A, ..., 12N) comprising an internal memory designed to store a signature variable and configuration variables;
the method comprising the following steps:
- generation (130) of an elementary signature (SE) for each of the electronic boards (12A, ..., 12N) from the configuration data stored in the centralized storage module (14);
- transmission (140) to each electronic board (12A, ..., 12N) of the elementary signature (SE) specific to this board (12A, ..., 12N);
- calculation (145) by each electronic board (12A, ..., 12N) of the signature variable according to the configuration variables stored in the internal memory of the electronic board (12A, ..., 12N);
- checking (150) by each electronic board (12A, ..., 12N) of the validity of the configuration variables stored in the internal memory of the board (12A, ..., 12N) using the received elementary signature (SE) and the signature variable; and
the method comprising the following step implemented for each electronic board (12A, ..., 12N), for which, during the step of checking (150) the validity of the configuration variables, the configuration variables are considered invalid:
- retrieving (160) the configuration data specific to this board (12A, ..., 12N) and modifying the configuration variables starting from the retrieved configuration data.

2. Method according to claim 1, wherein each elementary signature (SE) is generated by only one of the electronic boards (12A, ..., 12N) using the configuration data specific to each of the electronic boards (12A, ..., 12N) and stored in the centralized storage module (14).

3. Method according to claim 1 or 2, wherein the configuration data is stored as a secure data structure (20) associated with a global signature (24).

4. Method according to claim 3, wherein the method comprises the following step before the step of generation (130):
- checking (120) the validity of the configuration data of the data structure (20) by using the global signature (24) associated with this structure (20);
and the step of generation (130) is performed if the validity of the configuration data is checked.

5. Method according to claim 4, wherein, following the generation step, the set of elementary signatures (SE) and the global signature (24) are stored in the internal memory of one of the electronic boards (12A, ..., 12N), referred to as the main board (12A).

6. Method according to claim 5, wherein the steps of checking (120) the validity of the configuration data and of generation (130) of an elementary signature (SE) for each of the electronic boards (12A, ..., 12N), are implemented by the main board (12A).

7. Method according to any one of the preceding claims, wherein checking that the retrieved configuration data corresponds to the elementary signature (SE) is performed in the step of retrieving (160) the configuration data, and then the configuration variables are modified from the retrieved configuration data in order to store the retrieved configuration data in the internal memory of the board (12A, ... 12N).

8. Method according to any one of the preceding claims, wherein the method comprises, for each electronic board (12A, ..., 12N), for which the configuration variables are considered valid during the step (150) of checking the validity of the configuration variables:
- retrieval (180) of the configuration variables by the electronic board (12A, ..., 12N) from the internal memory of this board (12A, ... 12N).

9. Method according to any one of the preceding claims, wherein the step of retrieval (160) of the configuration data further comprises:
- retrieval by the corresponding electronic board (12A, ..., 12N) of configuration variables from the internal memory of this board (12A, ... 12N).

10. Method according to of any one of the preceding claims, wherein the method comprises the following steps:
- replacement of an electronic board (12B, ... 12N) in the electronic system (10) by a new electronic board;
- generation of an elementary signature (SE) for at least the new electronic board from the configuration data stored in the centralized storage module (14);
- transmission of the elementary signature (SE) at least to the new electronic board; and
- performance of the step (150) of checking the configuration variables for the new electronic board.

11. Computer program product comprising software instructions which, when implemented by computer equipment, implement the method according to any one of the preceding claims.

12. Electronic system (10) with centralized storage of the configuration data, the electronic system comprising a plurality of electronic boards (12A, ..., 12N) able to implement the operation of the electronic system (10) using configuration data specific to each of these boards (12A, ..., 12N), and a centralized storage module (14) able to store the configuration data centrally for all the electronic boards (12A, ..., 12N), each electronic board (12A, ..., 12N) comprising an internal memory designed to store a signature variable and configuration variables;
the electronic system (20) comprising means to implement the method according to any one of the claims 1 to 10.
